# FASCICULE DE BREVET EUROPEEN

(11) **EP 3 147 236 B1**
(45) Date de publication et mention de la délivrance du brevet: **27.02.2019**
(21) Numéro de dépôt: 16184580.5
(22) Date de dépôt: 17.08.2016
(51) Int. Cl.: B65D 85/36, B65D 33/16, B65D 33/00

(54) **EMBALLAGE REUTILISABLE POUR LE TRANSPORT DE UNE OU PLUSIEURS BAGUETTES**
WIEDERVERWENDBARE VERPACKUNG FÜR DEN TRANSPORT VON EINEM ODER MEHREREN BAGUETTEN
REUSABLE PACKAGING FOR TRANSPORTING ONE OR SEVERAL BAGUETTES

(30) Priorité: 25.09.2015 FR 1559039
(43) Date de publication de la demande: 29.03.2017
(73) Titulaire: Buntinx, Michèle, 1853 Stroombeek (BE)
(72) Inventeur: Buntinx, Michèle, 1853 Stroombeek (BE)
(74) Mandataire: Lecomte & Partners

(56) Documents cités:
- DE-U1- 20 104 618
- FR-A1- 2 878 234
- US-A- 5 941 641
- US-A1- 2011 038 564
- US-A1- 2014 270 579

## Description

### Domaine technique

L'invention a trait au domaine des sacs. Plus particulièrement, l'invention a trait au domaine des emballages pour le transport de baguette(s), plus particulièrement encore des emballages réutilisables.

### Technique antérieure

L'usage de sachets en papier ou en plastique pour le transport de baguette(s) est connu. De tels sachets sont généralement des sachets destinés à être jetés après une utilisation.

Le document de brevet WO 01/17864 A2 divulgue un emballage en film thermoplastique en plastique destiné au transport de produits alimentaires comme du pain du type pain de ménage. L'emballage comprend une enveloppe avec une ouverture, il comprend aussi un moyen de fermeture à zip. L'enseignement est intéressant en ce que l'emballage est réutilisable et comprend un moyen de fermeture.

Le document de brevet US 2005/0126951 A1 divulgue un sac en plastique s'étendant dans une direction longitudinale pour le conditionnement de pain. Il comprend une fermeture de type zip. Le sac peut être en polyuréthane ou bien en cellophane. L'enseignement est intéressant en ce que l'emballage est réutilisable et comprend un moyen de fermeture.

Le document de brevet WO 00/73162 A1 divulgue un emballage en plastique pour le transport de divers produits alimentaires, notamment de pain. L'emballage comprend une enveloppe avec une ouverture. L'emballage comprend aussi une bande élastique fixée sur l'enveloppe. La partie de l'enveloppe comprenant l'ouverture est destinée à être roulée sur elle-même pour fermer le passage et la bande élastique est destinée à ceinturer l'enveloppe pour maintenir en place la partie roulée de l'enveloppe. Le sac peut être en PVC, polyéthylène, polypropylène ou d'autres polymères organiques. La bande élastique peut être en caoutchouc naturel. L'enseignement est intéressant en ce que l'emballage est réutilisable et comprend un moyen de fermeture.

Les emballages des enseignements susmentionnés sont prévus pour le transport de divers produits alimentaires, notamment de pain, et sont spécialement conçus pour pouvoir être refermés à des fins d'hygiène et de conservation desdits produits. Néanmoins ces emballages ne sont réutilisables indéfiniment et en outre tendent, au fil du temps et de leur utilisation, à libérer dans la nourriture contenue des composés chimiques.

Le document de brevet US 2011/0038564 A1 divulgue un emballage réutilisable conforme au préambule de la revendication 1.

### Résumé de l'invention

### Problème technique

L'invention a pour objectif de proposer une solution palliant au moins un des inconvénients de l'art antérieur, en particulier de l'art antérieur susmentionné. Plus particulièrement, l'invention a pour objectif de proposer une solution d'emballage réutilisable pour le transport de baguette(s) de pain qui soit efficace et qui facilite son usage.

### Solution technique

L'invention a pour objet un emballage réutilisable pour le transport de produit(s) alimentaire(s), comprenant une enveloppe s'étendant suivant une direction longitudinale et avec une ouverture, apte à recevoir, via ladite ouverture, ledit ou lesdits produits alimentaires ; remarquable en ce que l'enveloppe est en matériau silicone et s'étend suivant la direction longitudinale sur une longueur supérieure à trois fois, préférentiellement cinq fois, la largeur moyenne de ladite enveloppe, de manière à pouvoir contenir une ou plusieurs baguettes de pain, l'emballage comprenant un premier système sur l'enveloppe pour fermer l'ouverture, et un deuxième système sur l'enveloppe configuré pour coopérer avec le premier système en vue de sécuriser l'enveloppe à l'état replié et/ou roulé.

Selon un mode avantageux de l'invention, le premier système est situé au niveau de l'ouverture à une extrémité de l'enveloppe et le deuxième système est situé longitudinalement à distance dudit premier système.

Selon un mode avantageux de l'invention, l'enveloppe est d'une largeur dans une direction transversale comprise entre 5% et 30% de sa longueur dans la direction longitudinale, préférentiellement entre 10% et 25% de ladite longueur, plus préférentiellement encore entre 15% et 20% de ladite longueur.

Selon un mode avantageux de l'invention, l'enveloppe comprend une première paroi avec une portion partant de l'ouverture destinée à former une paroi périphérique de ladite enveloppe à l'état replié et/ou roulé, le premier système comprenant un premier sous-système situé sur ladite portion au niveau de l'ouverture, le deuxième système étant sur ladite portion et situé longitudinalement à distance dudit premier sous-système. Paroi périphérique s'entend la paroi extérieure de l'enveloppe à l'état replié et/ou roulé.

Selon un mode avantageux de l'invention, le premier sous-système comprend un ou plusieurs premiers éléments de liaison fixés à la portion de la première paroi, le deuxième système comprenant un ou plusieurs deuxièmes éléments de liaison fixés à ladite portion et aptes à être liés avec le ou les premiers éléments de liaison. Eléments de liaison s'entend éléments de liaison ponctuelle.

Selon un mode avantageux de l'invention, le deuxième système comprend une ou plusieurs languettes fixées à la portion de la première paroi, ladite ou chacune desdites languettes comprenant un deuxième élément de liaison.

Selon un mode avantageux de l'invention, l'enveloppe comprend une deuxième paroi en vis-à-vis de la première paroi et liée à ladite paroi, le premier système comprenant un deuxième sous-système sur ladite deuxième paroi au niveau de l'ouverture.

Selon un mode avantageux de l'invention, la deuxième paroi comprend une patte destinée à être rabattue sur la première paroi pour fermer l'ouverture.

Selon un mode avantageux de l'invention, le deuxième sous-système comprend un ou des troisièmes éléments de liaison fixés à la deuxième paroi et aptes à être liés avec le ou les premiers éléments de liaison.

Selon un mode avantageux de l'invention, le ou les premiers éléments de liaison comprennent au moins un bouton et/ou au moins une boutonnière, ledit ou lesdits boutons et/ou ladite ou lesdites boutonnières faisant préférentiellement partie intégrante de l'enveloppe en matériau silicone.

Selon un mode avantageux de l'invention, l'enveloppe est de section transversale curviligne, préférentiellement circulaire, apte à être aplatie dans la configuration de l'enveloppe à l'état replié et/ou roulé.

Selon un mode avantageux de l'invention, l'enveloppe comprend des parois d'une épaisseur comprise entre 0,2mm et 1,5mm, préférentiellement entre 0,3mm et 1mm, plus préférentiellement encore entre 0,4mm et 0,7mm.

Selon un mode avantageux de l'invention, le ou les premiers éléments de liaison comprennent des portions « mâle » ou des portions « femelle » de boutons du type bouton fermoir déformables élastiquement, le ou les deuxièmes éléments de sécurisation et le ou les troisièmes éléments de sécurisation étant des portions de bouton correspondantes.

Selon un mode avantageux de l'invention, l'enveloppe est d'une longueur totale comprise entre 45cm et 75cm, préférentiellement comprise entre 55cm et 65cm.

Selon un mode avantageux de l'invention, l'enveloppe comprend des parois d'une épaisseur comprise entre 0,2mm et 1,5mm, préférentiellement entre 0,3mm et 1mm, plus préférentiellement encore entre 0,4mm et 0,7mm.

Selon un mode avantageux de l'invention, la première paroi de l'enveloppe et la deuxième paroi de l'enveloppe sont fabriquées par moulage et soudées ensemble sur les côtés.

Selon un mode avantageux de l'invention, le ou les premiers éléments de liaison sont des boutons du type bouton de « caban ».

Selon un mode avantageux de l'invention, le premier système et/ou le deuxième système comprend un ou plusieurs boutons du type « bouton pressoir ».

Selon un mode avantageux de l'invention, le ou les premiers éléments de liaison sont des boutons avec un profil en zigzag suivant une direction perpendiculaire à la première paroi.

Selon un mode avantageux de l'invention, la portion de la première paroi destinée à former la paroi périphérique de l'enveloppe en configuration roulée est d'une longueur dans la direction longitudinale comprise entre 5cm et 20cm, préférentiellement entre 10cm et 15cm.

Selon un mode avantageux de l'invention, le ou les premiers éléments de liaison sont situés longitudinalement entre l'ouverture et le ou les deuxièmes éléments de liaison ou en face longitudinalement de l'ouverture.

Selon un mode avantageux de l'invention, le ou les premiers éléments de liaison sur la première paroi sont à une distance du bord de l'ouverture de ladite paroi qui est inférieure à 5cm, préférentiellement inférieure à 3cm, plus préférentiellement encore inférieure à 1,5cm.

### Avantages de l'invention

Les mesures de l'invention sont intéressantes en ce que l'emballage réutilisable est adapté pour le transport de baguette(s) de pain, il est efficace et facilite son usage. En effet, l'emballage est en matériau silicone et il est par sa longueur adapté au transport de baguette(s) de pain. Le matériau silicone est très intéressant en ce qu'il rend l'emballage réutilisable à long terme. En particulier, l'emballage comprend un premier système de fermeture pour le transport et un deuxième système destiné à sécuriser l'enveloppe de l'emballage à l'état replié et/ou roulé en dehors des phases de transport. L'emballage peut être facilement stocké par exemple dans un sac à main en dehors de son usage pour le transport de baguette(s) de pain.

### Brève description des dessins

- La figure 1 est une vue en perspective d'un emballage réutilisable pour le transport de baguette(s) de pain conforme à l'invention et dans un premier mode de réalisation, l'emballage étant ouvert ;
- La figure 2 est une vue en perspective de l'emballage de la figure 1, l'emballage étant fermé ;
- La figure 3 est une vue en perspective de l'emballage des figures 1 et 2, l'enveloppe étant en format plié et/ou roulé ;
- La figure 4 est une vue en perspective d'un emballage réutilisable pour le transport de baguette(s) de pain conforme à l'invention et dans un deuxième mode de réalisation ;
- La figure 5 est une vue en perspective de l'emballage de la figure 4, l'emballage étant fermé ;
- La figure 6 est une vue en perspective de l'emballage des figures 4 et 5, l'enveloppe étant en format pliée et/ou roulée ;

### Description d'un mode de réalisation

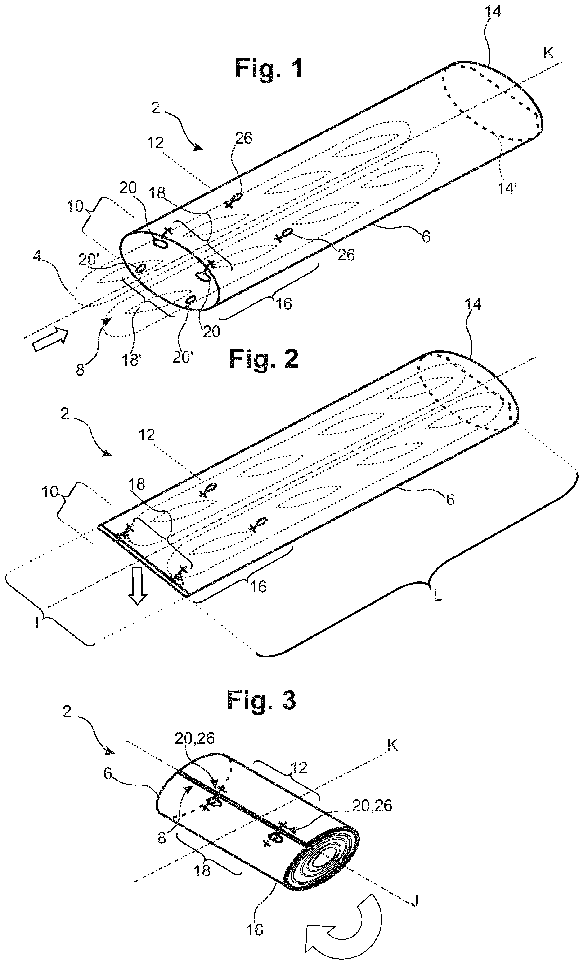

La figure 1 est une vue en perspective d'un emballage réutilisable 2 pour le transport de produit(s) alimentaire(s), notamment de baguette(s) de pain 4. L'emballage est conforme à l'invention et dans un premier mode de réalisation, l'emballage est présenté ouvert. L'emballage comprend une enveloppe 6 avec une ouverture 8 à une extrémité qui est apte à recevoir une ou plusieurs baguettes de pain. En l'occurrence l'enveloppe est configurée pour le logement de deux baguettes côte à côte. L'enveloppe est en matériau silicone et s'étend suivant une direction longitudinale « K » sur une longueur supérieure à trois fois, préférentiellement cinq fois, la largeur moyenne de ladite enveloppe.

Par l'ouverture à une extrémité on peut introduire la ou les baguettes de pain suivant la direction longitudinale de l'enveloppe. L'emballage comprend un premier système 10 sur l'enveloppe pour fermer l'ouverture. L'enveloppe est configurée pour pouvoir être repliée et/ou roulée, et l'emballage 2 comprend en plus du premier système un deuxième système 12 sur l'enveloppe configuré pour coopérer avec le premier système 10 en vue de sécuriser l'enveloppe à l'état replié et/ou roulé. En particulier, le premier système est situé au niveau de l'ouverture de l'enveloppe et le deuxième système est situé longitudinalement à distance du premier système.

L'enveloppe comprend une première paroi 14 et une deuxième paroi 14' en vis-à-vis de la première paroi et liée à la première paroi. Il est essentiel d'observer que la première paroi 14 de l'enveloppe 6 comprend une portion 16 partant de l'ouverture qui est destinée à former une paroi périphérique de l'enveloppe à l'état replié et/ou roulé. Le premier système 10 comprend en l'occurrence un premier sous-système 18 situé sur la portion 16 de la première paroi 14 au niveau de l'ouverture ; ce premier sous-système 18 comprend deux premiers éléments de liaison 20 fixés à cette portion 16 ; Ces premiers éléments de liaison sont des boutons qui sur l'image sont du type bouton de « caban » de forme ovale. Ce type de bouton de forme ovale est un exemple parmi d'autres de la variété des boutons qui peuvent correspondre aux premiers éléments de liaison. Le premier système 10 comprend aussi un deuxième sous-système 18' situé sur la deuxième paroi 14' au niveau de l'ouverture; ce deuxième sous-système comprend deux troisièmes éléments de liaison 20' fixés à la deuxième paroi. Ces troisièmes éléments de liaison peuvent être des boutonnières qui sur l'image forment des passages dans la deuxième paroi. Les boutonnières peuvent en alternative être réalisées par des lacets. Les premiers éléments de liaison 20, en l'occurrence les boutons de forme ovale, sont aptes à être liés avec les troisièmes éléments de liaison 20', en l'occurrence les boutonnières, pour fermer l'ouverture de l'enveloppe.

On peut également voir le deuxième système 12 sur la portion 16 de la première paroi et qui est situé longitudinalement à distance du premier sous système. Le deuxième système comprend, en l'occurrence, deux deuxièmes éléments 26 de liaison qui sont destinés à être liés avec les premiers éléments de liaison pour sécuriser l'enveloppe à l'état replié et/ou roulé. Ces deuxièmes éléments de liaison 26 sont en l'occurrence des boutonnières destinés à coopérer avec les boutons formant les premiers éléments de liaison 20. Le mode de liaison par bouton et boutonnière est intéressant en ce qu'il correspond à un mode de liaison efficace. Le choix du type de bouton peut par ailleurs donner un style particulier à l'emballage. Les boutonnières sont en l'occurrence réalisées par des lacets fixés sur la portion 16 de la première paroi 14. Un homme de l'art expert en couture peut aisément comprendre le terme technique de boutonnière, il peut aussi comprendre le terme d'oeillet synonyme dans le contexte de l'invention. En alternative, les boutons et les boutonnières peuvent être intervertis, les premiers éléments de liaison pouvant être réalisés par des boutonnières et les deuxièmes éléments et les troisièmes éléments de liaison pouvant être réalisés par des boutons. Encore en alternative de réalisation, les premiers éléments de liaison peuvent être des portions « mâles » ou « femelles » de bouton et les deuxièmes éléments peuvent être des portions complémentaires de bouton ; un bouton pressoir peut correspondre de manière générale à ce dernier type de bouton comprenant des portions mâle et femelle.

L'enveloppe 6 peut être de section transversale curviligne, par exemple de section elliptique. Cette mesure est intéressante en ce que l'enveloppe ouverte peut faciliter l'introduction ou l'extraction des baguettes de pain tout en étant apte à être aplatie à l'état replié et/ou roulé. L'enveloppe en matériau silicone peut être fabriquée par exemple par moulage. Il est à noter que le moulage peut être favorable à la mise à forme de section elliptique ou circulaire de l'enveloppe. A titre d'exemple les première et deuxième parois 14 et 14' peuvent être moulées séparément puis être soudées sur les côtés. Ce mode de fabrication peut être favorable au coût de l'enveloppe en particulier pour une production en grande quantité. L'enveloppe peut comprendre des parois d'une épaisseur comprise entre 0,2mm et 1,5mm, préférentiellement entre 0,3mm et 1mm, plus préférentiellement encore entre 0,4mm et 0,7mm. Dans un mode particulier de l'invention, l'enveloppe en matériau silicone peut être réalisée de sorte que l'on ait à opérer un léger effort d'introduction de la baguette et que l'enveloppe épouse la baguette. Une enveloppe de paroi sensiblement fine peut alors être adaptée. A l'opposé une enveloppe de paroi sensiblement plus épaisse peut générer une raideur recherchée par exemple pour l'introduction de multiples baguettes de pain.

Par ailleurs, les premiers éléments 20 ainsi que les deuxièmes éléments 26 et les troisièmes éléments 20' peuvent faire partie intégrante de l'enveloppe en matériau silicone. Par exemple, ces éléments de liaison peuvent être soudés sur l'enveloppe. Ces éléments de liaison peuvent comprendre des matériaux de charge mélangés à la base silicone pour augmenter leur résistance mécanique.

Il est à noter que chacun des sous-systèmes 18 et 18' du premier système 10 et le deuxième système 12 comprend en l'occurrence une paire d'éléments de liaison. Cette mesure est intéressante en ce que l'emballage tel que représenté est destiné au transport de deux baguettes, voire plus de deux baguettes. L'emballage peut cependant comprendre plus d'une paire d'éléments de liaison pour le transport de plusieurs baguettes. Cependant, on vise à rendre l'emballage efficace, le nombre d'éléments de liaison par système n'est pas corrélé au nombre de baguettes de pain destinées à être transportées, il pourrait cependant l'être pour des raisons de style.

L'enveloppe peut être de longueur totale particulière adaptée à un type de baguette particulier. Il est à noter que les baguettes de pain sont généralement de même masse mais elles peuvent varier de par leur longueur ; ainsi l'emballage peut être décliné selon les différentes variétés de baguettes. L'enveloppe peut être d'une longueur totale comprise entre 45cm et 75cm, préférentiellement comprise entre 55cm et 65cm. Cette mesure est favorable pour adapter l'emballage au transport des différents types de baguettes. Il peut toutefois être recherché à corréler la longueur totale de l'enveloppe avec une longueur typique d'une variété de baguette. Dans un mode de réalisation particulier (non représenté), l'enveloppe peut comprendre un premier tronçon longitudinal comprenant la portion de la paroi avec les systèmes, puis au moins un deuxième tronçon avec un profil en zigzag s'étendant le long de la direction longitudinale et formant un ressort destiné à travailler en extension. Le ou les deuxièmes tronçons peuvent ainsi s'adapter en longueur dans la direction longitudinale selon la longueur des baguettes logées dans l'enveloppe. Cette mesure peut être recherchée en particulier vue la diversité des modèles de baguettes de pain de sorte que l'emballage réutilisable soit adapté.

On peut voir en référence avec la figure 2 la configuration de l'emballage 2 conforme à l'invention et dans un premier mode de réalisation, avec l'ouverture de l'enveloppe fermée. L'enveloppe 6 est en matériau silicone et est d'une longueur « L » supérieure à trois fois, préférentiellement cinq fois, la largeur moyenne « l » de l'enveloppe. La largeur « l » est ici mesurée à l'ouverture de l'emballage à l'état aplati et dans une direction transversale et la longueur est mesurée dans la direction longitudinale « K ». La largeur « l » peut être comprise entre 5% et 30% de la longueur « L », préférentiellement entre 10% et 25%, plus préférentiellement encore entre 15% et 20% de la longueur dans la direction longitudinale.

On peut voir que le premier système 10 sur l'enveloppe 6 pour fermer l'ouverture de l'emballage est actif et que le deuxième système 12 sur l'enveloppe configuré pour coopérer avec le premier système en vue de sécuriser l'enveloppe à l'état replié et/ou roulé n'est pas actif. Le premier sous-système 18 comprenant les deux premiers éléments, en l'occurrence les boutons, et le deuxième système sont sur la portion 16 partant de l'ouverture, qui est en l'occurrence fermée, de la première paroi 14 de l'enveloppe (au-dessus sur l'image) destinée à former une paroi périphérique de l'enveloppe dans la configuration repliée et /ou roulée.

On peut voir en référence avec la figure 3 la configuration de l'emballage 2 conforme à l'invention, dans le premier mode de réalisation, l'enveloppe 6 étant roulée. On peut voir que le premier système sur l'enveloppe pour fermer l'ouverture de l'emballage est inactif. Cette mesure est implicite en ce que l'enveloppe ne contient pas de baguettes. Le deuxième système 12 est par contre actif avec le premier sous-système 18 du premier système pour sécuriser l'enveloppe roulée. L'enveloppe est représentée roulée, elle peut aussi être repliée, elle peut par ailleurs être repliée et roulée. Cette mesure est destinée au rangement de l'emballage réutilisable. L'enveloppe est configurée en particulier de sorte que l'enveloppe soit roulée à partir de l'extrémité opposée à l'ouverture. Cette mesure est implicite, elle permet à ce que la portion 16 partant de l'ouverture 8 de la première paroi et comprenant le deuxième système 12 soit accessible par l'utilisateur une fois l'enveloppe roulée. On peut observer que la portion de la première paroi forme la paroi périphérique 16 de l'enveloppe. En particulier l'épaisseur des parois de l'enveloppe peut être favorablement réalisée en corrélation avec la longueur de l'enveloppe de sorte à ce que la longueur de la portion de la première paroi dans la direction longitudinale corresponde sensiblement justement à la longueur périphérique de l'enveloppe roulée. La longueur périphérique s'entend la longueur de la portion en vis-à-vis de l'extérieur, de la paroi de l'enveloppe à l'état replié et/ou roulée, et mesurée dans le sens de l'enroulement. Il est à noter même si c'est implicite que l'utilisateur veillera à suffisamment serrer l'enveloppe lors du roulage de sorte à ce que les premiers éléments de liaison 20 du premier système puissent être liés aux deuxièmes éléments de liaison 26 du deuxième système qui sont situés à distance des premiers éléments sur la paroi périphérique et qui doivent pouvoir se rejoindre une fois l'enveloppe roulée. En l'occurrence, les deuxièmes éléments 26 sont fixés à distance des premiers éléments mais cette mesure ne limite pas l'invention. Il peut être recherché de répartir dans la direction transversale « J » les premiers éléments 20 de liaison ainsi que les deuxièmes éléments de liaison 26, pour équilibrer l'effort sur la paroi périphérique 16 générée lors de la sécurisation de l'enveloppe roulée 6.

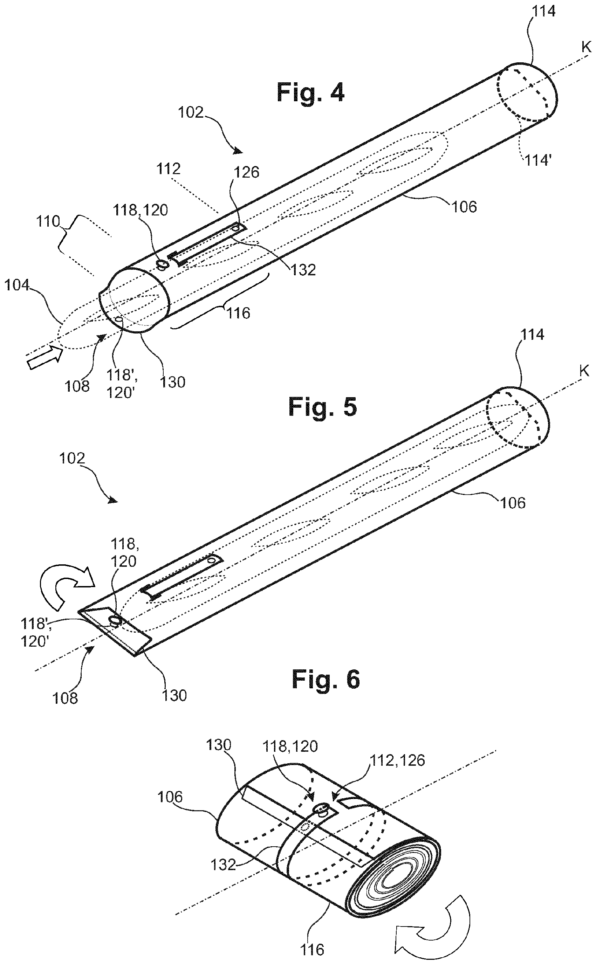

Le deuxième mode de réalisation de l'invention va être décrit en référence aux figures 4 à 6. Les numéros de référence du premier mode de réalisation des figures 1 à 3 sont utilisés pour désigner les éléments identiques ou correspondants, ces numéros étant toutefois majorés de 100 afin de bien distinguer les modes de réalisation.

La figure 4 est une vue en perspective d'un emballage 102 réutilisable pour le transport de baguette(s) de pain 104 conforme à l'invention et dans un deuxième mode de réalisation, l'emballage étant présenté ouvert. L'emballage comprend une enveloppe 106 avec une ouverture 108 à une extrémité qui est apte à recevoir une ou plusieurs baguettes de pain. En l'occurrence l'enveloppe est configurée pour le logement d'une baguette de pain. L'enveloppe est en matériau silicone et s'étend suivant une direction longitudinale « K » sur une longueur supérieure à trois fois, préférentiellement cinq fois, la largeur moyenne de ladite enveloppe. Par l'ouverture à une extrémité on peut introduire la baguette suivant la direction longitudinale de l'enveloppe. L'emballage comprend un premier système 110 sur l'enveloppe pour fermer l'ouverture. L'enveloppe est configurée pour pouvoir être repliée et/ou roulée, et l'emballage comprend en plus du premier système un deuxième système 112 sur l'enveloppe configuré pour coopérer avec le premier système 110 en vue de sécuriser l'enveloppe à l'état replié et/ou roulé. En particulier, le premier système 110 est situé au niveau de l'ouverture de l'enveloppe et le deuxième système est situé longitudinalement à distance du premier système. L'enveloppe comprend une première paroi 114 avec une portion 116 partant de l'ouverture 108 et apte à former une paroi périphérique de l'enveloppe à l'état replié et/ou roulé. Le premier système comprend en l'occurrence un unique premier élément de liaison 120 sur la première paroi au niveau de l'ouverture et un unique troisième élément de liaison 120' sur la deuxième paroi 114' au niveau de l'ouverture. Le deuxième système 112 comprend également un unique deuxième élément 126. Il est à noter que dans ce deuxième mode de réalisation la deuxième paroi 114' comprend une patte 130 au niveau de l'ouverture et qui est destinée à former un rabat de l'enveloppe lors de la fermeture de l'ouverture. Le troisième élément 120' de fermeture de l'ouverture est en l'occurrence une boutonnière réalisée dans cette patte. Cette mesure de l'invention peut être recherchée de par le mode de liaison des premier et troisième éléments de liaison 120 et 126. Il est aussi à noter que le deuxième système 112, en particulier situé longitudinalement à distance du premier système, peut comprendre un deuxième élément de liaison 126 situé à distance longitudinalement du premier système, tout en étant fixé sur la portion 116 de la première paroi et à proximité du premier élément de fixation 120. Ce cas particulier est en l'occurrence représenté sur l'image. Le deuxième élément de liaison, ici une boutonnière, est réalisé au bout d'un lacet 132 ou une languette qui est fixée à la première paroi à proximité du premier élément de liaison. Cette caractéristique de l'emballage peut être recherchée pour favoriser l'aspect pratique du repliage et/ou de l'enroulement de l'enveloppe, en particulier dans la phase finale de l'enroulement et dans le contexte d'un deuxième élément de liaison qui est unique. Par exemple, le lacet peut être attrapé en phase finale d'enroulement.

L'enveloppe 106 peut présenter une section transversale circulaire. Cette mesure est intéressante pour l'introduction de la baguette de pain en particulier dans le cas où l'enveloppe est configurée pour le transport d'une unique baguette. En effet, une baguette est généralement de section moyenne ovale, et son introduction dans une enveloppe de section généralement circulaire ne nécessite pas de pivotement préliminaire autour de la direction « K ». L'enveloppe de par l'usage du matériau silicone est apte à résister aux aspérités parfois coupantes que forment des entailles sur la baguette de pain après sa cuisson.

On peut voir en référence avec la figure 5 la configuration de l'emballage 102 conforme à l'invention et dans le deuxième mode de réalisation, avec l'ouverture 108 de l'enveloppe 106 fermée. On peut voir sur l'image les premier et troisième éléments de liaison 120 et 120' du premier système qui sont liés l'un avec l'autre pour fermer l'ouverture de l'emballage. Le premier élément de liaison 120 est en l'occurrence un bouton avec un profil en zigzag le long d'une direction perpendiculaire à la première paroi 114. Le bouton 120 est déformable élastiquement et peut faire partie intégrante de l'enveloppe en matériau silicone, il peut être soudé, il peut encore en alternative venir de matière avec la première paroi 114 de l'enveloppe. Ces mesures peuvent être recherchées pour faciliter la fabrication ou le coût de l'emballage. Le troisième élément 120' comme introduit en relation avec la figure 4 est une boutonnière sur la deuxième paroi 114' coopérant avec le bouton 120 sur la première paroi 114. La boutonnière en question est réalisée dans la patte 130 de la deuxième paroi formant un rabat de l'enveloppe. Le troisième élément comprend en l'occurrence en termes génériques une partie « femelle » de la liaison du premier système, ce troisième élément, en alternative peut comprendre une partie « mâle » de la liaison en question. En particulier, les parties mâle et femelle des premier et troisième éléments, respectivement, peuvent, en alternative, être réalisés vice et versa.

On peut voir en référence avec la figure 6 la configuration de l'emballage 102 conforme à l'invention, dans le deuxième mode de réalisation, l'enveloppe 106 étant roulée. On peut voir dans cette configuration de l'emballage le deuxième système 112 coopérant avec le premier sous-système 118 du premier système pour sécuriser l'enveloppe roulée. La portion partant de l'ouverture de la première paroi, comprenant le premier sous-système 118 et le deuxième système 112, forme la paroi périphérique 116 de l'enveloppe 106 en configuration roulée. On peut voir le deuxième élément de liaison 126, au bout de la languette 132, lié avec le bouton formant le premier élément 120. On peut observer que le bouton 120 en question, apte à recevoir le rabat 130 de l'enveloppe pour la fermeture de l'enveloppe, est légèrement en retrait longitudinalement en arrière du bord de la première paroi. Il peut être recherché principalement pour des raisons stylistiques de l'emballage réutilisable que la patte de rabat 130 soit de plus grande dimension ce qui peut générer une distance du premier élément de liaison avec le bord de l'ouverture. L'enveloppe 106 à l'état replié et/ou roulé est destinée à occuper un volume qui sera recherché à être restreint de sorte à ce que l'emballage 102 puisse être porté aisément par exemple dans un sac à main ou bien au bout d'un porte-clés.

## Revendications

1. Emballage réutilisable (2 ; 102) pour le transport de produit(s) alimentaire(s) (4 ; 104), comprenant une enveloppe (6 ; 106) s'étendant suivant une direction longitudinale (K) et avec une ouverture (8 ; 108), apte à recevoir, via ladite ouverture, ledit ou lesdits produits alimentaires, ladite enveloppe (6 ; 106) étant en matériau silicone ; et un premier système (10 ; 110) sur l'enveloppe (6 ; 106) pour fermer l'ouverture (8 ; 108) ;
**caractérisé en ce que**
l'enveloppe (6 ; 106) s'étend suivant la direction longitudinale (K) sur une longueur supérieure à trois fois, préférentiellement cinq fois, la largeur moyenne de ladite enveloppe, de manière à pouvoir contenir une ou plusieurs baguettes de pain ; et
l'emballage comprend un deuxième système (12 ; 112) sur l'enveloppe (6 ; 106) configuré pour coopérer avec le premier système (10 ; 110) en vue de sécuriser l'enveloppe à l'état replié et/ou roulé.

2. Emballage (2 ; 102) selon la revendication 1, **caractérisé en ce que** le premier système (10 ; 110) est situé au niveau de l'ouverture (8 ; 108) à une extrémité de l'enveloppe (6 ; 106) et le deuxième système (12 ; 112) est situé longitudinalement à distance dudit premier système (10 ; 110).

3. Emballage (2 ; 102) selon l'une des revendications 1 et 2, **caractérisé en ce que** l'enveloppe (6 ; 106) comprend une première paroi (14 ; 114) avec une portion (16 ; 116) partant de l'ouverture (8 ; 108) destinée à former une paroi périphérique de ladite enveloppe (6 ; 106) à l'état replié et/ou roulé, le premier système (10 ; 110) comprenant un premier sous-système (18 ; 118) situé sur ladite portion (16 ; 116) au niveau de l'ouverture (8 ; 108), le deuxième système (12 ; 112) étant sur ladite portion (16 ; 116) et situé longitudinalement à distance dudit premier sous-système (18 ; 118).

4. Emballage (2 ; 102) selon la revendication 3, **caractérisé en ce que** le premier sous-système (18 ; 118) comprend un ou plusieurs premiers éléments de liaison (20 ; 120) fixés à la portion (16 ; 116) de la première paroi (14 ; 114), le deuxième système (12 ; 112) comprenant un ou plusieurs deuxièmes éléments de liaison (26 ; 126) fixés à ladite portion (16 ; 116) et aptes à être liés avec le ou les premiers éléments de liaison (20 ; 120).

5. Emballage (2 ; 102) selon l'une des revendications 3 et 4, **caractérisé en ce que** l'enveloppe (6 ; 106) comprend une deuxième paroi (14' ; 114') en vis-à-vis de la première paroi (14 ; 114) et liée à ladite paroi (14 ; 114), le premier système (10 ; 110) comprenant un deuxième sous-système (18' ; 118') sur ladite deuxième paroi (14' ; 114') au niveau de l'ouverture (8 ; 108).

6. Emballage (2 ; 102) selon les revendications 4 et 5, **caractérisé en ce que** le deuxième sous-système (18'; 118') comprend un ou des troisièmes éléments de liaison (20' ; 120') fixés à la deuxième paroi (14' ; 114') et aptes à être liés avec le ou les premiers éléments de liaison (20 ; 120).

7. Emballage (2 ; 102) selon les revendications 4 et 5, **caractérisé en ce que** le ou les premiers éléments de liaison (20 ; 20') comprennent au moins un bouton et/ou au moins une boutonnière, ledit ou lesdits boutons et/ou ladite ou lesdites boutonnières faisant préférentiellement partie intégrante de l'enveloppe (6 ; 106) en matériau silicone.

8. Emballage (2 ; 102) selon l'une des revendications 1 à 7, **caractérisé en ce que** l'enveloppe (6; 106) est de section transversale curviligne, préférentiellement circulaire, apte à être aplatie dans la configuration de l'enveloppe (6 ; 106) à l'état replié et/ou roulé.

9. Emballage (2 ; 102) selon l'une des revendications 1 et 8, **caractérisé en ce que** l'enveloppe (6 ; 106) comprend des parois (14, 14' ; 114, 114') d'une épaisseur comprise entre 0,2mm et 1,5mm, préférentiellement entre 0,3mm et 1mm, plus préférentiellement encore entre 0,4mm et 0,7mm.

## Patentansprüche

1. Wiederverwendbare Verpackung (2; 102) zum Transportieren eines oder mehrerer Lebensmittelerzeugnisse (4; 104), umfassend eine Hülle (6; 106), die sich in einer Längsrichtung (K) erstreckt und eine Öffnung (8; 108) aufweist, dafür geeignet, durch besagte Öffnung das eine oder die mehreren Lebensmittelerzeugnisse aufzunehmen, wobei die Hülle (6; 106) aus Silikonmaterial hergestellt ist; und ein erstes System (10; 110) an der Hülle (6; 106) zum Verschließen der Öffnung (8; 108); **dadurch gekennzeichnet, dass**
die Hülle (6; 106) sich in der Längsrichtung (K) über eine Länge erstreckt, die größer als drei Mal, bevorzugt fünf Mal, als die durchschnittliche Breite der Hülle ist, sodass sie ein oder mehr Baguettebrote enthalten kann; und die Verpackung ein zweites System (12; 112) an der Hülle (6; 106) umfasst, das dafür ausgelegt ist, mit dem ersten System (10; 110) zusammenzuwirken, um die Hülle in einem zusammengefalteten und/oder aufgerollten Zustand zu sichern.

2. Verpackung (2; 102) nach Anspruch 1, **dadurch gekennzeichnet, dass** sich das erste System (10; 110) an der Öffnung (8; 108) an einem Ende der Hülle (6; 106) befindet und das zweite System (12; 112) sich in Längsrichtung von dem ersten System (10; 110) beabstandet befindet.

3. Verpackung (2; 102) nach einem der Ansprüche 1 und 2, **dadurch gekennzeichnet, dass** die Hülle (6; 106) eine erste Wand (14; 114) mit einem Abschnitt (16; 116), der an der Öffnung (8; 108) beginnt, zur Bildung einer Umfangswand der Hülle (6; 106) im zusammengefalteten und/oder aufgerollten Zustand umfasst, wobei das erste System (10; 110) ein erstes Teilsystem (18; 118) umfasst, das sich an besagtem Abschnitt (16; 116) an der Öffnung (8; 108) befindet, wobei das zweite System (12; 112) auf besagtem Abschnitt (16; 116) ist und sich in Längsrichtung von dem ersten Teilsystem (18; 118) beabstandet befindet.

4. Verpackung (2; 102) nach Anspruch 3, **dadurch gekennzeichnet, dass** das erste Teilsystem (18; 118) ein oder mehr erste Verbindungselemente (20; 120) umfasst, die an dem Abschnitt (16; 116) der ersten Wand (14; 114) befestigt sind, wobei das zweite System (12; 112) ein oder mehr zweite Verbindungselemente (26; 126) umfasst, die an besagtem Abschnitt (16; 116) befestigt sind und dazu geeignet sind, mit dem einen oder den mehreren ersten Verbindungselementen (20; 120) verbunden zu werden.

5. Verpackung (2; 102) nach einem der Ansprüche 3 und 4, **dadurch gekennzeichnet, dass** die Hülle (6; 106) eine zweite Wand (14'; 114') gegenüber der ersten Wand (14; 114) und mit dieser Wand (14; 114) verbunden umfasst, wobei das erste System (10; 110) ein zweites Teilsystem (18'; 118') an der zweiten Wand (14'; 114') in Höhe der Öffnung (8; 108) umfasst.

6. Verpackung nach Ansprüchen 4 und 5, **dadurch gekennzeichnet, dass** das zweite Teilsystem (18'; 118') ein oder mehr dritte Verbindungselemente (20', 120') umfasst, die an der zweiten Wand (14'; 114') befestigt sind und dazu geeignet sind, mit dem einen oder den mehreren ersten Verbindungselementen (20; 120) verbunden zu werden.

7. Verpackung (2; 102) nach Ansprüchen 4 und 5, **dadurch gekennzeichnet, dass** das eine oder die mehreren ersten Verbindungselemente (20; 20') mindestens einen Knopf und/oder mindestens ein Knopfloch umfassen, wobei der mindestens eine Knopf und/oder das mindestens eine Knopfloch bevorzugt einen integralen Teil der Hülle (6; 106) aus Silikonmaterial bilden.

8. Verpackung (2; 102) nach einem der Ansprüche 1 bis 7, **dadurch gekennzeichnet, dass** die Hülle (6; 106) einen kurvenförmigen Querschnitt, bevorzugt kreisförmig, aufweist, der dazu geeignet ist, in der Konfiguration der Hülle (6; 106) im zusammengefalteten und/oder aufgerollten Zustand abgeplattet zu werden.

9. Verpackung (2; 102) nach einem der Ansprüche 1 und 8, **dadurch gekennzeichnet, dass** die Hülle (6; 106) Wände (14, 14'; 114, 114') von einer Dicke zwischen 0,2mm und 1,5mm, bevorzugt zwischen 0,3mm und 1mm, bevorzugter zwischen 0,4mm und 0,7mm, umfasst.

## Claims

1. Reusable packaging (2; 102) for transporting food product(s) (4; 104), comprising an envelope (6; 106) extending in a longitudinal direction (K) and with an opening (8; 108), adapted to receive, via said opening, said one or more food products, said envelope (6; 106) being made of silicone material; and a first system (10; 110) on the envelope (6; 106) for closing the opening (8; 108); **characterized in that**
the envelope (6; 106) extends in the longitudinal direction (K) over a length greater than three times, preferably five times, the average width of said envelope, so as to be able to contain one or more bread baguettes; and the package comprises a second system (12; 112) on the envelope (6; 106) configured to cooperate with the first system (10; 110) for securing the envelope in a folded and/or rolled state.

2. Packaging (2; 102) according to claim 1, **characterized in that** the first system (10; 110) is located at the opening (8; 108) at one end of the envelope (6; 106). and the second system (12; 112) is located longitudinally away from said first system (10; 110).

3. Packaging (2; 102) according to one of claims 1 and 2, **characterized in that** the envelope (6; 106) comprises a first wall (14; 114) with a portion (16; 116) starting from the opening (8; 108) for forming a peripheral wall of said envelope (6; 106) in the folded and/or rolled state, the first system (10; 110) comprising a first subsystem (18; 118) located on said portion (16; 116) at the opening (8; 108), the second system (12; 112) being on said portion (16; 116) and located longitudinally away from said first subsystem (18; 118).

4. Packing (2; 102) according to claim 3, **characterized in that** the first subsystem (18; 118) comprises one or more first connecting elements (20; 120) attached to the portion (16; 116) of the first wall (14; 114), the second system (12; 112) comprising one or more second connecting elements (26; 126) attached to said portion (16; 116) and capable of being bonded with the one or more first connecting element (20; 120).

5. Packaging (2; 102) according to one of claims 3 and 4, **characterized in that** the envelope (6; 106) comprises a second wall (14 '; 114') vis-à-vis the first wall (14; 114) and connected to said wall (14; 114), the first system (10; 110) comprising a second subsystem (18 '; 118') on said second wall (14'; 114') at the level of the opening (8; 108).

6. Packaging according to claims 4 and 5, **characterized in that** the second subsystem (18 '; 118') comprises one or more third connecting elements (20'; 120') attached to the second wall (14 '; 114') and able to be connected with the one or more first connecting elements (20; 120).

7. Packaging (2; 102) according to claims 4 and 5, **characterized in that** the one or more first connecting elements (20; 20') comprise at least one button and/or at least one buttonhole, said at least one button and/or said at least one buttonhole preferably forming integral part of the envelope (6; 106) of silicone material.

8. Packaging (2; 102) according to one of claims 1 to 7, **characterized in that** the envelope (6; 106) is of curvilinear cross-section, preferably circular, able to be flattened in the configuration of the envelope (6; 106) in the folded and/or rolled state.

9. Packaging (2; 102) according to one of claims 1 and 8, **characterized in that** the envelope (6; 106) comprises walls (14, 14 '; 114, 114') of a thickness between 0.2mm and 1.5mm, preferably between 0.3mm and 1 mm, more preferably between 0.4mm and 0.7mm.
